# EUROPEAN PATENT SPECIFICATION

(11) **EP 3 312 738 B1**
(45) Date of publication and mention of the grant of the patent: **28.04.2021**
(21) Application number: 16810955.1
(22) Date of filing: 12.06.2016
(51) Int. Cl.: G06F 16/00, G06F 16/332, H04W 4/02, G06F 17/18, G06F 16/9032, G06F 16/9537

(54) **METHOD AND DEVICE FOR DISPLAYING KEYWORD**
VERFAHREN UND VORRICHTUNG ZUM ANZEIGEN VON SCHLÜSSELWÖRTERN
PROCÉDÉ ET DISPOSITIF D'AFFICHAGE DE MOT-CLÉ

(30) Priority: 19.06.2015 CN 201510346513
(43) Date of publication of application: 25.04.2018
(73) Proprietor: Advanced New Technologies Co., Ltd., George Town, Grand Cayman KY1-9008 (KY)
(72) Inventor: TANG, Yili, Hangzhou 310099 (CN); FANG, Yuan, Hangzhou 310099 (CN); YANG, Zimo, Hangzhou 310099 (CN)
(74) Representative: Fish & Richardson P.C.
(86) International application number: PCT/CN2016/085399
(87) International publication number: WO 2016/202214

(56) References cited:
- CN-A- 103 399 966
- CN-A- 103 744 940
- CN-A- 103 916 476
- CN-A- 103 916 476
- CN-A- 104 166 700
- CN-A- 104 572 846
- CN-A- 104 615 715
- CN-A- 104 679 787
- US-A1- 2013 073 541
- US-A1- 2013 073 686
- US-A1- 2014 207 748
- US-A1- 2014 207 795
- US-A1- 2014 351 255

## Description

The present application claims priority to Chinese Patent Application No. 201510346513.2 filed on June 19,2015 and entitled "KEYWORD PRESENTING METHOD AND APPARATUS".

### Technical Field

The present application relates to the field of communication technologies, and in particular, to a keyword presenting method and apparatus.

### Background Art

With the rapid development of Internet technologies, more and more people acquire various types of information via network. For example, a user may search for information by using a search engine of a mobile terminal or a PC terminal. How to improve a search experience becomes an urgent problem to be solved.

CN 103 916 476 describes a location-based information pushing method, which comprises the steps that the geographic position information of a user is obtained, statistics is conducted on network information, to which the user pays close attention, within a set geographic position range according to the geographic position information of the user, and the network information is pushed to the user according to a statistical result and the geographic position information of the user.

US 2014/0351255 describes a method of recommending a keyword, which includes redefining a semantic area using a search log including location information, and providing a keyword associated with the semantic area to a user located in the semantic area as a recommended keyword. The semantic area may be a virtual area generated based on a separate criterion unrelated to an administration unit. A keyword recommendation system may separately redefine and use a semantic area instead of using existing administrative district information or global positioning system location information.

CN 104 615 715 describes a social network event analyzing method and system based on geographic positions comprising conducting participle processing on each social network data text to obtain words of the social network data text; building a mapping relation between the social network data texts and the geographic positions corresponding to the social network data texts; determining the social network data text corresponding to each preset target geographic position; conducting weight calculation on the words of the social network data text corresponding to the target geographic position, and obtaining keywords of the social network data text corresponding to the target geographic position to be used as hot events of the target geographic position to be pushed.

US 2014/0207795 describes a method and server for searching and determining an active area. A search request is received by a server and an active area corresponding to the search request is searched in accordance with the search request. The active area found by the server is determined objectively based on the obtained related information, and information of the active area is returned Similar examples of related prior art are US 2014/207748 and US 2013/073686.

### Summary of the Invention

In view of this, the present application provides a keyword presenting method and apparatus. The present invention is defined by the appended independent claims. Dependent claims constitute embodiments of the invention. Any other subject-matter outside the scope of protection of the claims is to be considered as not being part of the present invention.

### Brief Description of the Drawings

FIG. 1 is a flowchart of a keyword presentation method according to an example of the present application;
FIG. 2 is a flowchart of another keyword presentation method according to an embodiment of the present application;
FIG. 3 is a schematic diagram of an application scenario of keyword presentation according to an exemplary embodiment of the present application;
FIG. 4 is a flowchart of another keyword presentation method according to an exemplary embodiment of the present application;
FIG. 5 is a schematic structural diagram of a server terminal according to an exemplary embodiment of the present application; and
FIG. 6 is a schematic structural diagram of a keyword presentation apparatus according to an embodiment of the present application.

### Detailed Description

Embodiments will be described in detail herein, and examples thereof are shown in the accompanying drawings. In the following description related to the accompanying drawings, identical numerals in different drawings denote identical or similar elements unless otherwise indicated. The implementations described in the following embodiments do not represent all embodiments consistent with the present application. On the contrary, they are merely examples of apparatuses and methods consistent with some aspects of the present application as detailed in the appended claims.

The terminologies used in the present application are merely used for describing particular embodiments but are not intended to limit the present application. Unless clearly specified otherwise in the context, the singular forms "a/an", "the", and "this" used in the present application and appended claims are also intended to include the plural forms. It should be further understood that, the term "and/or" used herein refers to and encompasses any or all of the possible combinations of one or more associated items listed.

It should be understood that, although various information are described by using terms such as "first", "second", and "third", in the present application, such information should not be limited to these terms. These terms are used only to distinguish information of the same type from each other. For example, first information may also be referred to as second information without departing from the scope of the present application, and similarly, second information may also be referred to as first information. Depending on the context, the word "if" used herein may be interpreted as "when", "while", or "in response to the determination of'.

In the related technology, when a user performs searching, some hot keywords may be presented to the user in a search page. The user may select a hot keyword to implement searching for the hot keyword, thus facilitating the use of the user. However, in such an implementation solution, the presented keywords are usually fixed, and personalized presentation cannot be performed according to an actual situation of the user. Therefore, the presented keyword has a low accuracy.

To solve the foregoing problems, the present application provides a keyword presentation solution, which enhances the accuracy of the presented keyword.

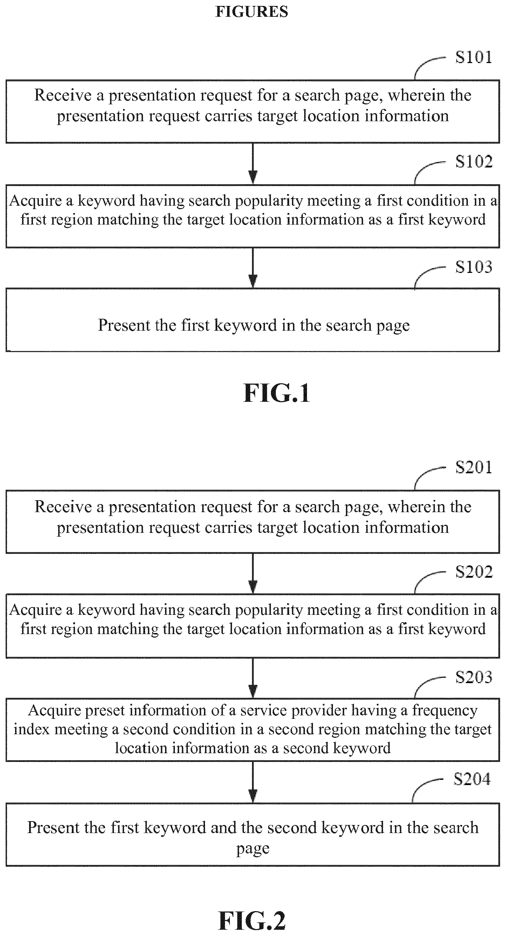

FIG. 1 is a flowchart of a keyword presentation method according to an example of the present application.

Referring to FIG. 1, the keyword presentation method may be applied to a server terminal, and include the following steps:
Step 101: A presentation request for a search page is received, wherein the presentation request carries target location information.

In this embodiment, a user may input a presentation request for a search page by using a terminal. After receiving the presentation request for the search page, the terminal may acquire current location information, and then send the current location information, carried in the presentation request for the search page as the target location information, to a server terminal. The user may also self-define the target location information. For example, the terminal acquires location information selected by the user, and then sends the location information selected by the user, carried in the presentation request for the search page as the target location information, to the server terminal.

Step 102: A keyword having search popularity meeting a first condition in a first region matching the target location information is acquired as a first keyword.

In this embodiment, the first region may be a geographic region where the target location information resides. For example, the first region is an administrative region such as a city or a province where the target location information resides. The search popularity may be the number of searches or a search frequency within a preset time period, for example, the number of times of searching within the last 24 hours. The first condition may be set by a developer, for example, search popularity is ranked in top N, N being a natural number greater than or equal to 1.

In this step, after receiving the presentation request, the server terminal may acquire keywords having the search popularity ranked in top N in the administrative region where the target location information resides, and use the acquired keywords as the first keywords. It may be understood that the number of the first keywords is N.

Step 103: The first keywords are presented in the search page.

In this embodiment, the server terminal may return the first keywords to the terminal, such that the terminal presents the first keywords in the search page.

It can be seen from the foregoing description that, the present application may use a keyword having search popularity meeting a first condition in a first region matching target location information as a first keyword, and present the first keyword in a search page. In this way, different keywords may be presented to a user on the basis of different target locations, thus realizing personalized keyword presentation, enhancing accuracy of keyword presentation, and further improving search experience of the user.

FIG. 2 is a flowchart of another keyword presentation method according to an embodiment of the present application.

Referring to FIG. 2, the keyword presentation method is applied to a server terminal, and include the following steps:
Step 201: A presentation request for a search page is received, wherein the presentation request carries target location information.

In this embodiment, when needing to search for information, a user uses an APP installed on a terminal to search for the information. After the user inputs a presentation request for a search page, the terminal acquires the search page from the server terminal and presents the search page to the user, such that the user uses the search page for searching.

In this step, the user inputs the presentation request for the search page by means of enabling a search function, clicking a search input box, or other manners. For example, supposing that a search APP is installed on the terminal of the user, when the user opens the APP, it is regarded that the presentation request for the search page input by the user is received. Further, supposing that an APP having a search function is installed on the terminal of the user, for example, Alipay™ Wallet, when the user opens the Alipay™ Wallet, a function page thereof is presented, and a search button for enabling a search function is usually provided in the function page. When the user wants to search through the Alipay™ Wallet, the user may click the search button, to input the presentation request for the search page.

In this embodiment, the target location information is the current location information of the terminal or location information selected by the user. Specifically, in this step, after receiving the presentation request for the search page, the terminal acquires the current location information, and then sends the current location information, carried in the presentation request for the search page as the target location information, to the server terminal. Optionally, after the terminal receives the presentation request for the search page, if the acquired current location information is different from previously recorded location information, the terminal may generate prompt information and send it to the user, such that the user selects the location information, and then send the location information selected by the user, carried in the presentation request for the search page as the target location information, to the server terminal.

Step 202: A keyword having search popularity meeting a first condition in a first region matching the target location information is acquired as a first keyword.

In this embodiment, the first region is a geographic region where the target location information resides. For example, the first region is an administrative region such as a city or a province where the target location information resides. The search popularity is the number of searches or a search frequency within a preset time period, for example, the number of times of searching within the last 24 hours. The first condition may be set by a developer, for example, search popularity is ranked in top N, which is not particularly limited in the present application.

In this step, after receiving the presentation request, the server terminal acquires the keywords having the search popularity ranked in top N in the administrative region where the target location information resides as the first keywords. For example, the server terminal may acquire keywords having search popularity ranked in top 3 within the last 24 hours in a city where the target location resides as the first keywords. In this way, the keywords having a high popularity currently in the administrative region where the target location information resides are presented to the user, thus enhancing accuracy of keyword presentation.

Step 203: Preset information of a service provider having a frequency index meeting a second condition in a second region matching the target location information is acquired as a second keyword.

In this embodiment, after receiving the presentation request, the server terminal further determines a second region matching the target location information according to offline statistics, and acquire preset information of a service provider having a frequency index meeting a second condition in the second region as the second keyword.

The second region is a geographic grid where the target location information resides or an adjacent geographic grid. The frequency index may be parameters obtained through calculation according to features such as popularity and an applause rate of the service provider. The service provider may be a merchant. The second condition may also be set by a developer, for example, frequency indexes are ranked in top M, M being a natural number greater than or equal to 1.

In this embodiment, the server terminal generates the geographic grid according to location information of the service provider. Specifically, the server terminal makes statistics on location information of all merchants, and then generate multiple geographic grids through a GeoHash algorithm according to the location information, wherein each geographic grid contains one or more service providers. For example, the server terminal may make statistics on location information of merchants throughout the country, set the side length of the geographic grid as 2 kilometers, and then map all the merchants on which statistics are made to the multiple generated geographic grids by using a GeoHash algorithm.

In this embodiment, the server terminal may calculate a frequency index of each service provider according to a TF-IDF (Term Frequency - Inverse Document Frequency) algorithm. Specifically, the TF-IDF algorithm calculates a product of a TF (Term Frequency) multiplied by an IDF (Inverse Document Frequency), and in this embodiment, the frequency index of the service provider is equal to a product of a term frequency of the service provider multiplied by an inverse document frequency of the service provider. Specifically, the service provider is usually a merchant, the TF is equal to a weighted sum of information such as brand popularity and a brand applause rate of the merchant, and the IDF is equal to a reciprocal of a frequency of appearance of a merchant brand in all the geographic grids. The IDF may be used to downgrade common merchant brands and highlight regionally distinctive merchant brands. The TF is multiplied by the IDF to obtain the frequency index of each merchant brand. It should be noted that, documents involved in the TF-IDF algorithm refer to all the geographic grids.

In this step, the acquiring preset information of a service provider having a frequency index meeting a second condition in a second region matching the target location information as a second keyword includes the following three cases.

In a first case, the second region matching the target location information is a geographic grid where the target location information resides.

In such a case, the server terminal determines first the geographic grid where the target location information resides, then sequence all service providers in the geographic grid in a descending order of frequency indexes, select the service providers ranked in top M, and use preset information of the M service providers as the second keywords. The preset information of the service providers is generally brand information, such as a shop name and a logo, of the service providers.

In a second case, the second region matching the target location information is one or more geographic grids adjacent to the target location information.

In this case, if the target location information does not belong to any geographic grid, one or more geographic grids adjacent to the target location information may be selected. Then, all service providers in the one or more geographic grids are sequenced in a descending order of frequency indexes, service providers ranked in top M are selected, and preset information of the M service providers is used as the second keywords. For example, eight geographic grids adjacent to the target location information may be selected at the server terminal, and the preset information of the M service providers in the eight geographic grids is selected in a descending order of frequency indexes as the second keywords.

In a third case, the second region matching the target location information is the first region.

In this case, if the target location information does not belong to any geographic grid, the first region matching the target location information may be selected. Then, all service providers in the first region are sequenced in a descending order of frequency indexes, the service providers ranked in top M are selected, and preset information of the M service providers is used as the second keyword. For example, the preset information of M service providers in a city where the target location information resides may be selected at the server terminal in a descending order of frequency indexes as the second keywords.

It can be seen from the above that, the present application may also make statistics on the frequency indexes of all the service providers by using a geographic grid as a unit, and present the preset information of the service providers having a high frequency index in the geographic grid where the target location information resides or the adjacent geographic grid to a user as the second keywords, thus enhancing accuracy of keyword presentation.

It should be noted that, this embodiment does not limit an execution sequence of the foregoing steps 202 and 203. In an actual application, step 203 may be performed before step 202.

Step 204: The first keyword and the second keyword are presented in the search page.

Based on the foregoing steps 202 and 203, after acquiring the first keyword and the second keyword, the server terminal may return the first keyword and the second keyword to the terminal, such that the terminal presents the first keyword and the second keyword in the search page.

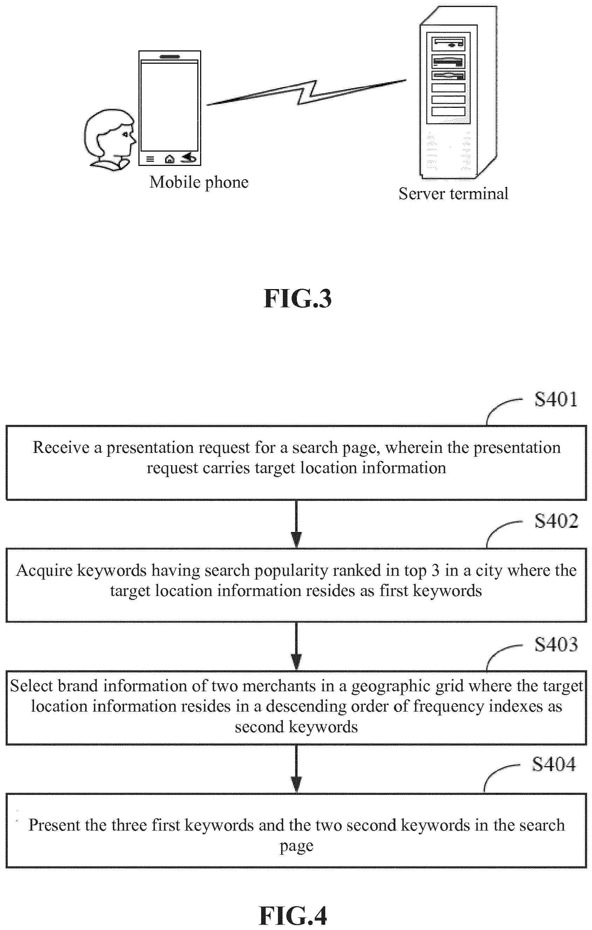

FIG. 3 is a schematic diagram of an application scenario of keyword presentation according to an exemplary embodiment of the present application.

Referring to FIG. 3, a user may open an APP Alipay™ Wallet by using a mobile phone (or another terminal device), and then click "Explore" on a function page of the Alipay™ Wallet. After an operation of clicking "Explore" is detected, it is regarded that a presentation request for a search page input by the user is received. The mobile phone sends target location information carried in the presentation request to a server terminal, thereby acquiring the search page from the server terminal and presenting the search page to the user.

FIG. 4 is a flowchart of another keyword presentation method according to an exemplary embodiment of the present application, which is corresponding to the application scenario shown in FIG. 3. Referring to FIG. 4, the keyword presentation method is applied to a server terminal, and includes the following steps:
Step 401: A presentation request for a search page is received, wherein the presentation request carries target location information.
Step 402: Keywords having search popularity ranked in top 3 in a city where the target location information resides are acquired as first keywords.

In this embodiment, if the target location information is Zhongguancun, in this step, the server terminal may acquire first keywords having search popularity ranked in top 3 within 24 hours in Beijing city. It is supposed that the top 3 first keywords are separately: Siebel, Diaoye Sirloin, and cafe.

Step 403: Brand information of two merchants in a geographic grid where the target location information resides is selected in a descending order of frequency indexes as second keywords.

In this embodiment, it is supposed that brands of the two merchants selected from a geographic grid where Zhongguancun is located are: Middle 8th Restaurant and Spice Spirit.

Step 404: The three first keywords and the two second keywords are presented in the search page.

Based on the steps 402 and 403, in this step, the server terminal returns Siebel, Diaoye Sirloin, cafe, Middle 8th Restaurant and Spice Spirit to the mobile phone, such that the mobile phone presents the five keywords in the search page.

In the embodiment shown in FIG. 4, the server terminal may use the method provided in the foregoing method embodiment shown in FIG. 2 to implement keyword presentation, and details are not repeated herein.

The present application further provides an embodiment of a keyword presentation apparatus corresponding to the foregoing embodiment of the keyword presentation method.

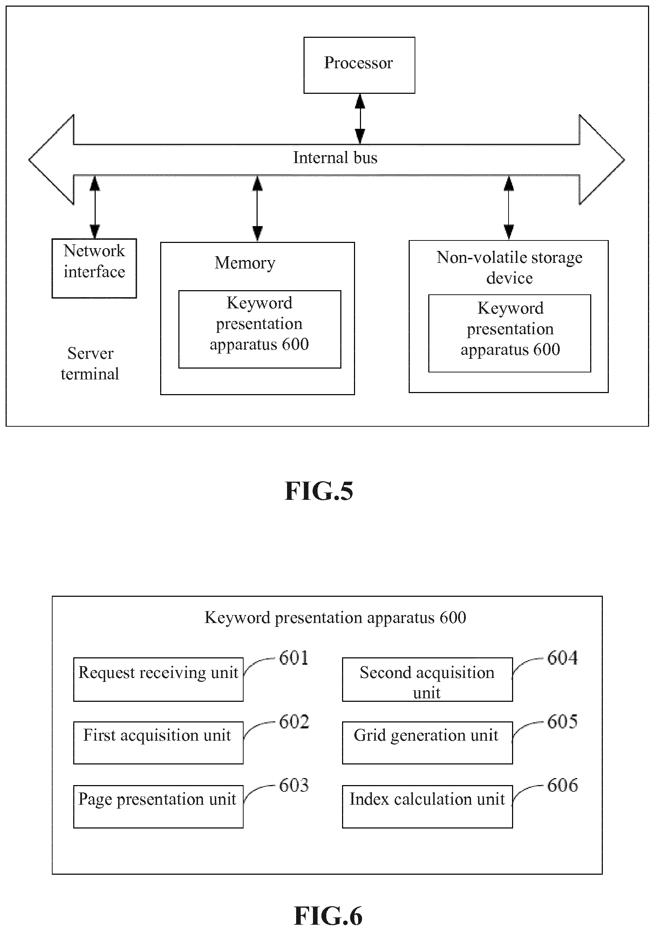

The embodiment of the keyword presentation apparatus in the present application is applied to a server terminal. The apparatus embodiment may be implemented by using software or hardware, or implemented in the manner of a combination of software and hardware. When software implementation is taken as an example, an apparatus in the logical sense is formed after a processor of the server terminal where the apparatus is located reads corresponding computer program instructions from a non-volatile storage device to a memory and runs the instructions. With regard to hardware, as shown in FIG. 5, FIG. 5 is a structural diagram of hardware of a server terminal where the keyword presentation apparatus is located according to the present application. In addition to a processor, a memory, a network interface, and a non-volatile storage device that are shown in FIG. 5, the server terminal where the apparatus in the embodiment is located may usually further include other hardware according to actual functions of the server terminal, and details are not described herein.

Referring to FIG. 6, FIG. 6 is a schematic structural diagram of a keyword presentation apparatus according to an embodiment of the present application. The keyword presentation apparatus 600 includes:
a request receiving unit 601, a first acquisition unit 602,
a page presentation unit 603, a second acquisition unit 604, a grid generation unit 605, and an index calculation unit 606.

The request receiving unit 601 is configured to receive a presentation request for a search page, wherein the presentation request carries target location information.

The first acquisition unit 602 is configured to acquire a keyword having search popularity meeting a first condition in a first region matching the target location information as a first keyword.

The page presentation unit 603 is configured to present the first keyword in the search page.

The second acquisition unit 604 is configured to acquire preset information of a service provider having a frequency index meeting a second condition in a second region matching the target location information as a second keyword.

The page presentation unit 603 is further configured to present the first keyword and the second keyword in the search page.

The grid generation unit 605 is configured to generate multiple geographic grids according to location information of the service provider, wherein each geographic grid contains one or more service providers; and
the second region matching the target location information is a geographic grid where the target location information resides.

Optionally, when the target location information does not belong to any geographic gird, the second region matching the target location information is:
one or more geographic girds adjacent to the target location information.

Optionally, when the target location information does not belong to any geographic grid, the second region matching the target location information is:
the first region.

Optionally, the grid generation unit 605 is specifically configured to generate, through a GeoHash algorithm, the multiple geographic grids according to the location information of the service provider.

The index calculation unit 606 is configured to calculate a frequency index of each service provider according to a TF-IDF algorithm.

Optionally, the search popularity is the number of searches or a search frequency within a preset time period.

Optionally, the target location information is current location information or location information selected by a user.

Optionally, the first region is an administrative region where the target location information resides.

For an implementation process of functions and effects of all the units in the apparatus, refer to an implementation process of corresponding steps in the foregoing method, and details are not described herein again.

The apparatus embodiment basically corresponds to the method embodiment. Therefore, reference is made to the description of the method embodiment for related portions.

## Claims

1. A method for presenting keywords to a user in a search page, the method comprising:
receiving (S201, S401), at a server terminal, a presentation request for the search page from a terminal of the user, wherein the user uses the terminal for inputting the presentation request and wherein the presentation request comprises information for a target location corresponding to a location of the terminal acquired after the user inputs the presentation request at the terminal;
determining a first administrative region where the target location resides, wherein the first administrative region is a geographic region where the target location resides;
obtaining (S201), by the server terminal, a first keyword having search frequency that meets a first condition, wherein the first condition is set in relation to search frequencies for searching keywords within a preset time period in the first administrative region, wherein the first keyword matches the first condition;
generating multiple geographic grids according to locations of a set of service providers, wherein the multiple geographic grids are based on statistic information for the locations of the set of service providers, and wherein each geographic grid includes one or more service providers from the set of service providers;
determining, by the server terminal, a second region matching the target location, wherein the second region is a first geographic grid from the multiple geographic grids where the target location resides or an adjacent grid to the first geographic grid;
based on ordering the service providers in the set of service providers in a descending order according to frequency indexes associated with each of the service providers, selecting a service provider having a frequency index meeting a second condition in the second region;
obtaining (S203) preset information from the service provider as a second keyword; and
returning (S204, S404), by the server terminal, the first keyword and the second keyword for presenting in the search page of the terminal of the user.

2. The method of claim 1, wherein when the target location information does not belong to any geographic gird, the second region matching the target location information comprises one or more geographic girds adjacent to the target location information.

3. The method of claim1, wherein when the target location information does not belong to any geographic grid, the second region matching the target location information is:
the first region.

4. The method of any one of claims 1 to 3, wherein the step of generating multiple geographic grids according to location information of the service provider comprises generating, through a GeoHash algorithm, the multiple geographic grids according to the obtained location information of the service provider.

5. The method of any one of claims 1 to 4, further comprising calculating a frequency index of each service provider according to a TF-IDF algorithm.

6. The method of any one of claims 1 to 5, wherein the terminal is configured to acquire the target location information and to send the target location information to the server terminal.

7. The method of any one of claims 1 to 6, wherein the target location information comprises current location information or location information selected by the user.

8. The method of any one of claims 1 to 7, wherein the first region comprises a geographic region where the target location information resides.

9. The method of claim 1 or claim 8, wherein a region where the target location information resides comprises a region that includes the target location.

10. The method of any one of claims 1 to 9, wherein the preset information of the service provider comprises a name of the service provider.

11. The method of any one of claims 1 to 10, wherein the preset time period is 24 hours.

12. The method of any one of claims 1 to 11, wherein the search popularity meeting a first condition includes the search popularity being ranked in the top N, N being a natural number greater than or equal to 1.

13. An apparatus for presenting keywords, the apparatus comprising a processor, a memory, a network interface, and a non-volatile storage device, the processor being configured to perform the method of any one of claims 1 to 12.

## Patentansprüche

1. Verfahren zum Präsentieren von Schlüsselwörtern für einen Benutzer auf einer Suchseite, wobei das Verfahren Folgendes umfasst:
Empfangen (S201, S401) einer Präsentationsanforderung für die Suchseite an einem Serverendgerät von einem Endgerät des Benutzers, wobei der Benutzer das Endgerät zum Eingeben der Präsentationsanforderung verwendet und wobei die Präsentationsanforderung Informationen für einen Zielstandort umfasst, der einem Standort des Endgeräts entspricht, der erfasst wurde, nachdem der Benutzer die Präsentationsanforderung am Endgerät eingegeben hat;
Bestimmen einer ersten administrativen Region, in der sich der Zielstandort befindet, wobei die erste administrative Region eine geografische Region ist, in der sich der Zielstandort befindet;
Erhalten (S201) eines ersten Schlüsselworts mit einer Suchhäufigkeit, die eine erste Bedingung erfüllt, durch das Serverendgerät, wobei die erste Bedingung mit Bezug auf Suchhäufigkeiten zum Suchen von Schlüsselwörtern innerhalb einer voreingestellten Zeitperiode in der ersten administrativen Region eingestellt ist, wobei das erste Schlüsselwort mit der ersten Bedingung übereinstimmt;
Erzeugen von mehreren geografischen Rastern, die Standorten eines Satzes von Dienstanbietern entsprechen, wobei die mehreren geografischen Raster auf statistischen Informationen für die Standorte des Satzes von Dienstanbietern basieren und wobei jedes geografische Raster einen oder mehrere Dienstanbieter aus dem Satz von Dienstanbietern beinhaltet;
Bestimmen einer zweiten Region, die mit dem Zielstandort übereinstimmt, durch das Serverendgerät, wobei die zweite Region ein erstes geografisches Raster der mehreren geografischen Raster, in dem sich das Endgerät befindet, oder ein dem ersten geografischen Raster benachbartes Raster ist;
Auswählen eines Dienstanbieters mit einem Häufigkeitsindex, der einer zweiten Bedingung in der zweiten Region entspricht, auf Basis des Sortierens der Dienstanbieter im Satz von Dienstanbietern in einer absteigenden Reihenfolge gemäß Häufigkeitsindices, die mit jedem der Dienstanbieter verknüpft sind;
Erhalten (S203) von voreingestellten Informationen von den Dienstanbietern als ein zweites Schlüsselwort; und
Zurückgeben (S204, S404) des ersten Schlüsselworts und des zweiten Schlüsselworts zum Präsentieren auf der Suchseite des Endgeräts des Benutzers durch das Serverendgerät.

2. Verfahren nach Anspruch 1, wobei, wenn die Zielstandortinformationen zu keinem geografischen Raster gehören, die zweite Region, die mit den Zielstandortinformationen übereinstimmt, ein oder mehrere den Zielstandortinformationen benachbarte geografische Raster umfasst.

3. Verfahren nach Anspruch 1, wobei, wenn die Zielstandortinformationen zu keinem geografischen Raster gehören, die zweite Region, die mit den Zielstandortinformationen übereinstimmt, die erste Region ist.

4. Verfahren nach einem der Ansprüche 1 bis 3, wobei der Schritt des Erzeugens von mehreren geografischen Rastern gemäß Standortinformationen des Dienstanbieters das Erzeugen der mehreren geografischen Raster gemäß den erhaltenen Standortinformationen des Dienstanbieters über einen GeoHash-Algorithmus umfasst.

5. Verfahren nach einem der Ansprüche 1 bis 4, das ferner das Berechnen eines Häufigkeitsindex jedes Dienstanbieters gemäß einem TF-IDF-Algorithmus umfasst.

6. Verfahren nach einem der Ansprüche 1 bis 5, wobei das Endgerät dazu ausgelegt ist, die Zielstandortinformationen zu erfassen und die Zielstandortinformationen an das Serverendgerät zu senden.

7. Verfahren nach einem der Ansprüche 1 bis 6, wobei die Zielstandortinformationen aktuelle Standortinformationen oder vom Benutzer ausgewählte Standortinformationen umfassen.

8. Verfahren nach einem der Ansprüche 1 bis 7, wobei die erste Region eine geografische Region umfasst, in der sich die Zielstandortinformationen befinden.

9. Verfahren nach Anspruch 1 oder Anspruch 8, wobei eine Region, in der sich die Zielstandortinformationen befinden, eine Region umfasst, die den Zielstandort beinhaltet.

10. Verfahren nach einem der Ansprüche 1 bis 9, wobei die voreingestellten Informationen des Dienstanbieters einen Namen des Dienstanbieters umfassen.

11. Verfahren nach einem der Ansprüche 1 bis 10, wobei die voreingestellte Zeitperiode 24 Stunden ist.

12. Verfahren nach einem der Ansprüche 1 bis 11, wobei die Suchbeliebtheit, die eine erste Bedingung erfüllt, die Suchbeliebtheit beinhaltet, die in die ersten N eingestuft ist, wobei N eine natürliche Zahl größer als oder gleich 1 ist.

13. Einrichtung zum Präsentieren von Schlüsselwörtern, wobei die Einrichtung einen Prozessor, einen Speicher, eine Netzwerkschnittstelle und eine nichtflüchtige Speichervorrichtung umfasst, wobei der Prozessor dazu ausgelegt ist, das Verfahren nach einem der Ansprüche 1 bis 12 durchzuführen.

## Revendications

1. Procédé de présentation de mots-clés à un utilisateur dans une page de recherche, le procédé comprenant :
la réception (S201, S401), sur un terminal de serveur, d'une demande de présentation concernant la page de recherche en provenance d'un terminal d'utilisateur, dans lequel l'utilisateur utilise le terminal pour saisir la demande de présentation et dans lequel la demande de présentation comprend des informations concernant un emplacement cible correspondant à un emplacement du terminal acquis après que l'utilisateur a saisi la demande de présentation sur le terminal ;
la détermination d'une première région administrative où se trouve l'emplacement cible, dans lequel la première région administrative est une région géographique où se trouve l'emplacement cible ;
l'obtention (S201), par le terminal de serveur, d'un premier mot clé ayant une fréquence de recherche qui satisfait une première condition, dans lequel la première condition est définie relativement à des fréquences de recherche pour rechercher des mots-clés pendant une période de temps prédéfinie dans la première région administrative, dans lequel le premier mot-clé correspond à la première condition ;
la génération de multiples grilles géographiques conformément à des emplacements d'un ensemble de fournisseurs de services, dans lequel les multiples grilles géographiques sont basées sur des informations statistiques concernant les emplacements de l'ensemble de fournisseurs de services, et dans lequel chaque grille géographique comporte un ou plusieurs services provenant de l'ensemble de fournisseurs de services ;
la détermination, par le terminal de serveur, d'une deuxième région correspondant à l'emplacement cible, dans lequel la deuxième région est une première grille géographique parmi les multiples grilles géographiques où se trouve l'emplacement cible ou une grille adjacente à la première grille géographique ;
sur la base du classement des fournisseurs de services dans l'ensemble de fournisseurs de services dans un ordre décroissant conformément à des indices de fréquence associés à chacun des fournisseurs de services, la sélection d'un fournisseur de services ayant un indice de fréquence satisfaisant une deuxième condition dans la deuxième région ;
l'obtention (S203) d'informations prédéfinies à partir du fournisseur de services en tant que deuxième mot clé ; et
le renvoi (S204, S404), par le terminal de serveur, du premier mot clé et du deuxième mot clé pour leur présentation dans la page de recherche du terminal d'utilisateur.

2. Procédé selon la revendication 1, dans lequel, lorsque les informations d'emplacement cible n'appartiennent à aucune grille géographique, la deuxième région correspondant aux informations d'emplacement cible comprend une ou plusieurs grilles géographiques adjacentes aux informations d'emplacement cible.

3. Procédé selon la revendication 1, dans lequel, lorsque les informations d'emplacement cible n'appartiennent à aucune grille géographique, la deuxième région correspondant aux informations d'emplacement cible est :
la première région.

4. Procédé selon l'une quelconque des revendications 1 à 3, dans lequel l'étape de génération de multiples grilles géographiques conformément à des informations d'emplacement du fournisseur de services comprend la génération, par le biais d'un algorithme GeoHash, des multiples grilles géographiques conformément aux informations d'emplacement obtenues du fournisseur de services.

5. Procédé selon l'une quelconque des revendications 1 à 4, comprenant en outre le calcul d'un indice de fréquence de chaque fournisseur de services conformément à un algorithme TF-IDF.

6. Procédé selon l'une quelconque des revendications 1 à 5, dans lequel le terminal est configuré pour acquérir les informations d'emplacement cible et pour envoyer les informations d'emplacement cible au terminal de serveur.

7. Procédé selon l'une quelconque des revendications 1 à 6, dans lequel les informations d'emplacement cible comprennent des informations d'emplacement actuel ou des informations d'emplacement sélectionnées par l'utilisateur.

8. Procédé selon l'une quelconque des revendications 1 à 7, dans lequel la première région comprend une région géographique où se trouvent les informations d'emplacement cible.

9. Procédé selon la revendication 1 ou la revendication 8, dans lequel une région où se trouvent les informations d'emplacement cible comprend une région qui comporte l'emplacement cible.

10. Procédé selon l'une quelconque des revendications 1 à 9, dans lequel les informations prédéfinies du fournisseur de services comprennent un nom du fournisseur de services.

11. Procédé selon l'une quelconque des revendications 1 à 10, dans lequel la période de temps prédéfinie est de 24 heures.

12. Procédé selon l'une quelconque des revendications 1 à 11, dans lequel la popularité de la recherche satisfaisant une première condition comprend le fait que la popularité de la recherche est classée parmi les N premiers, N étant un nombre entier supérieur ou égal à 1.

13. Appareil de présentation de mots-clés, l'appareil comprenant un processeur, une mémoire, une interface réseau et un dispositif de stockage non volatil, le processeur étant configuré pour mettre en œuvre le procédé selon l'une quelconque des revendications 1 à 12.
